Europäisches Patentamt

European Patent Office

Office européen des brevets

(11) Numéro de publication: **0 058 734**
**A1**

## DEMANDE DE BREVET EUROPEEN

(21) Numéro de dépôt: 81101279.8

(22) Date de dépôt: 23.02.81

(51) Int. Cl.³: **B 23 Q 7/00,** B 27 M 3/18

(43) Date de publication de la demande: 01.09.82
**Bulletin 82/35**

(71) Demandeur: **Basso, Antonio, V.1e Ferraris, 10,
I-30036 Santa Maria di Sale (Venezia) (IT)**

(72) Inventeur: **Basso, Antonio, V.1e Ferraris, 10,
I-30036 Santa Maria di Sale (Venezia) (IT)**

(74) Mandataire: **Sassatelli, Franco, Via Mazzini, 170,
I-40139 Bologna (IT)**

(84) Etats contractants désignés: **AT BE DE FR GB SE**

(54) **Transporteur pour station de pressage pour former des corps de meubles.**

(57) On emploie un transporteur pour stations de pressage pour corps de meuble en formation avec plan fixe (8) de stationnement pour les positions d'introduction, pressage et décharge et plan mobile (9) pour porter en même temps en station de formation le corps prédisposé en station d'introduction et au déchargement le corps déjà pressé. Les dits plan (8, 9) consistent en des éléments à listels transversaux pour opérer à compénétration au moyen de l'émersion des éléments du plan mobile des espaces intermédiaires de celui fixe. Le dit mouvement à impulsion initial à la main est effectué selon deux composantes combinées: en sens horizontal avec glissement sur des guides rectilignes (12) moyennant un cylindre (17) à application central sur embasement (1) et en sens vertical en utilisant un couple de petites colonnes (3) cylindriques de guide. La machine permet particularité d'emploi pour petites et moyennes entreprises, avec un considérable réduction des coûts auprès des transporteur actuellement employés.

EP 0 058 734 A1

0058734

- I -

<u>Transporteur pour station de pressage pour former des corps de meubles:</u>

L'invention se réfère à un appareil transporteur qu'on peut employer en station de pressage pour former des corps de meubles, qui porte, avec effet contemporain, l'ensemble de formation préalablement disposé en station d'introduction, en station de pressage et le corps formé en station de déchargement. L'appareil peut être connecté avec des lignes de transport en acheminement à la fabrication et au déchargement.

La machineemploie une structure à listels de partie fixe opérant comme plan de stationnement et qui est traversée par un plan mobile à éléments analogues à listels qui en saillent, afin de permettre l'enlèvement des corps déposés et leur contemporaine déposition sur les stations successives. Le plan mobile est actionné par impulsions à la main et en mouvement à deux composantes est prévu: dans le sens vertical au moyen d'un couple de petites colonnes cylindriques de guide et, sur le plan horizontal, avec glissement sur guides rectilignes en utilisant un cylindre appliqué en position centrale sur l'emnasement. Des transporteurs automatisés avec mouvement intermittent sont normalement employés afin de permettre de porter en succession les en

- 2 -

sembles à prises de courant enclenchées provenant de la li
gne d'alimentation, en station d'encheminement et ensuite
de pressage, et puis de déchargement avec transport à magasin. Les dites machines, de dimensions considérables,
absolvent leur tâche, mais elles résultent particulièrement coûteuses sous l'aspect des coûts de production et d'
entretien pour les petites et moyennes entreprises. De
plus, le dit automatisme porrait se démontrer d'emploi pas
rationnel dans les productions où une fabrication est nécessaire de l'ensemble de formation en station de pressa
ge.

Le trouvé permet la réalisation d'un appreil à plan mobile qu'on peut actionner par une impulsion initiale à la
main et qui réalise: une simplification générale des compo
sants et, par conéquent, une réduction considérable dans
les coûts de production et d'entretien. Pour la fabrication
l'opérateur après avoir achvé les opérations éventuelles
à exécuter sur l'ensemble à former en station d'enchemine
ment ou de pressage, pourra actionner par impulsion initia
le le plan mobile exécutant les transfers sur les stations.

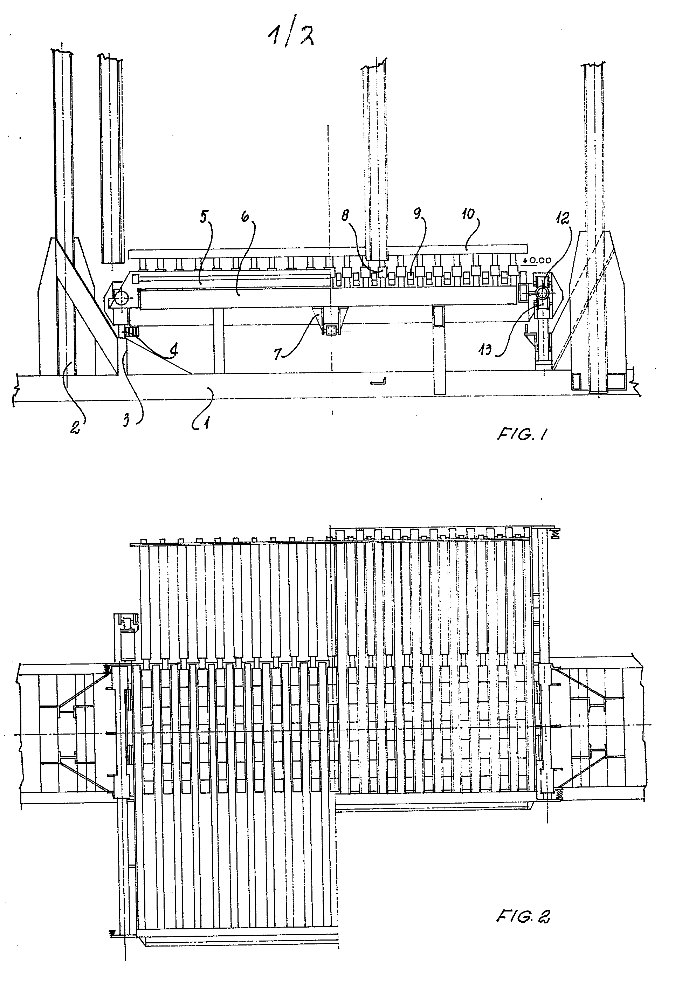

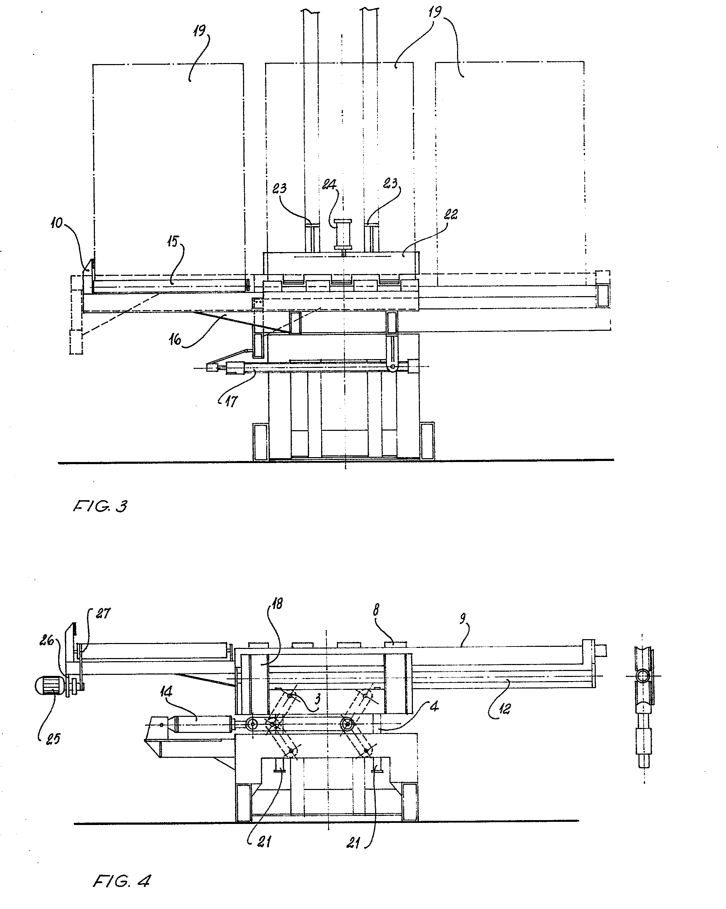

La forme de réalisation est illustrée dans les dessins des
Tables I et 2, où la Fig. I est la vue partiellement sectionnée de l'appareil, avec en évidence, les plans des par
ties fixes et mobiles opérant en compénétration pour évi
ter l'interférence en station de pressage. La fig. 2 mon
tre les positions horizontales du plan mobile en phase de
pressage avec introduction réalisable dans la partie gauche et décharge à celle a droite. La fig. 3 met en éviden

- 3 -

ce l'encombrement maximum de l'appareil montrant en hachu
re: le contour du corps à former en station d'introduction
delui du corps en formation et enfin le contour du corps
formé parvenu en station de déchargement et le mécanisme
de déplacement horizontal par piston I7 et du dispositif
de soulèvement vertical à presseurs latéraux 22, 23 et
24. La fig. 4 est la vue latéral pour montrer les composants du mouvement vertical effctué par le cylindre I4,
par les bielles de poussée et d'accouplement et par les
guides cylindriques de glissement. Le plan mobile est sou
mis aux deux mouvements combinés, dont l'un horizontal et
l'autre vertical. Le mouvement horizontal est consenti par
le couple de guides rectilignes I2 coulant sur roues mode
lées de guide I3, montées sur l'ensemble de support I8
ayant un mouvement vertical guidé par les petites colonnes
à martinets cylindriques 4. Pour maintenir horizontal le
plan 9, les martinets sont équipés avec dispositif à vis
de réglage 2I.

Le mouvement vertical est déterminé par la couple de cylin
dres I4 prévus en correspondance de chaque côté et commandant le soulèvement du plan de fabrication 9, moyennant
la bielle de poussée et d'accouplement 3. Ce cylindre de
mouvement vertical est commandé à la main. Le plan de fabrication soulevé mécaniquement par les cylindres I4 jusqu'
à un niveau supérieur au zéro, le plan porte en soulèvement le corps de meuble déjà formé et, en même temps, il
fait parvenir l'ensemble suivant à former en station de
pressage. L'appllication des prises pour la préparation
de l'ensemble à former est prévue en station d'introduction
lorsque le plan mobile est au-dessous du niveau 0. Le dé

- 4 -

placement horizontal effectué par le cylindre I7 position
né centralement et qui a son point d'appui sur le chassis
de partie fixe en position 7, fait avancer le plan jusqu'
à la fin de course et porte le corps de meuble à contact
avec l'arrêt de sécurité IO, introduisant en même temps
l'ensemble de formation en station d'assemblage. Après a
voir atteint cette position, le cylindre I4 commande l'a
baissement sur le plan vertical du plan mobile en determi
nant le déchargement du corps de meuble déjà formé sur les
rouleaux d'appui final I5 et le meuble à presser sur le
plan fixe 8. Le cylindre I7 invertit sa course et commande l'extraction du plan mobile 9 en le maintenant bloqué
en cette position: cela dans le but d'éviter des oscilla
tions dans la phase d'assemblage.

Pour permettre même l'emploi du dispositif libre des liens
dimensionnels du meuble et, en tout cas, pour garantir
l'appui des côtés sur des parties à même de neutraliser
la poussée de pressage, l'on prévoit l'emploi d'un pressoir latéral 22 inférieur structuré avec des supports à
équerre. Cette pièce possède un mouvement vertical avec
des guides cylindriques 23 et est équipé avec cylindre de
commande pneumatique 24 à petite course à commande vertica
le de la pièce 22, dans le but d'éviter l'interférence en
tre les équerres d'appui et le plan mobile 9 lorsque ce
dernier se déplace verticalement. Les commandes des cylin
dres sont prévues au moyen de poussoirs manuels et avec
action contemporaine entre les cylindres I4 et 24. Pour
la motorisation des rouleaux de déchargement, un motoréducteur 25 est employé supporté par le disque 26 est a-

- 5 -

vec des courroies trapézoidales de connexion 27 qui transmettent le mouvement aux rouleaux I5.


En variante, un plan de pressage continu est prévu avec insertion moyennant un ruban à mouvement transversal et un plan avec parties de compénétration à colonnes saillantes du champ opératif au moyen de commande pneumatique. En particulier, la possibilité du plan mobile de se mettre en position au-dessous du niveau O, comme illustré par la fig. 4 à droit, permet à l'opérateur d'exécuter sur l'ensemble à former des opérations intégratives en phase de pressage qui exigent leur exécution en même temps avec la phase de pressage. La version illustrée prévoit l'embasement I, les colonnes 3 du plan mobile, les martinets cylindriques de guide 4 des déplacements verticaux du plan mobile, la partie frontale 5 du plan mobile, la poutre de support 6 du plan fixe, la jonction à charnières de support 7, le plan fixe 8 et le plan mobile 9.

Revendications:

1) Transporteur pour stations de pressage pour former des corps de meubles, caractérisé par le fait qu'il emploie une structure à listels de partie fixe opérant comme plan de stationnement et qui est traversé par un plan mobile avec des éléments analogues à li stels saillant de lui, afin de permettre l'enlèvement des corps déposés sur lui et leur déposition contemporaine sur les stations suivantes.

2) Tansporteur pour stations de pressage pour former des corps del meubles, selon la revendication précédente, caractérisé par le fait que le plan mobile est sujet à deux mouvements combinés, dont l'un horizontal et l'autre vertical. Le mouvement horizontal est permis par le couple de guides rectilignes 12 qui glissent sur des roues modelées 13 montées sur groupe de support 18 ayant un mouvement ver tical guidé par le petites colonnes à martinets cylindriques 4. Pour maintenir horizontal le plan 9, les pivots possèdent un dispo sitif de réglage à vis 21.

3) Transporteur pour stations de pressage pour former des corps de meubles, selon les revendications précédentes, caractérisé par le fait que le mouvement vertical est déterminé par le couple de cylin dres 14 prévus en correspondance de chaque côté et commandant le soulèvement du plan de fabrication 9 au moyen de la bielle de pous sée et accouplement 3. La commande de ce cylindre de mouvement ver tical est manuelle. Le plan de travail soulevé mécaniquement par les cylindres 14 jusqu'au niveau au-dessus du zéro porte en soulè vement le corps de meuble déjà formé et, en même temps, il fait at teindre à l'ensemble suivant à former la station de pressage.

4) Transporteur pour stations de pressage pour former des corps de meubles, selon les revendications précédentes, caractérisé par le fait que l'application des prises pour la préparation de l'ensemble à former est prévue en station d'introduction et avec le plan mobile au-dessous du niveau zéro. Le déplacement horizontal effectué par le cylindre 17 disposé centralement et ayant son point d'appui sur le chassis de partie fixe en position 7, fait avancer le plan jusqu'à la fin de la course et porte le corps mobile en contact avec l'arret de sécurité 10, en introduisant en meme temps l'ensemble de formation en station d'assemblage. Après avoir atteint cette position, le cylindre 14 commande l'abaissement du plain mobile sur celui vertical en déposant le corps de meuble déjà formé sur le rouleaux d'appui final 15 et le meuble à presser sur le plan fixe 8.

5) Transporteur pour stations de pressage pour former des corps de meubles, selon les revendications précédentes, caractérisé par le fait que le cylindre 17, en invertant la course, commande l' extraction du plan mobile 9 et le maintient en cette position. Ce la dans le but d'eviter des oscillations dans la phase d'assembla ge.

6) Transporteur pour stations de pressage pour former des meubles, selon les revendications précédentes, caractérisé par le fait que, afin de permettre meme l'emploi du dispositif libre des liens dimensionnels du meuble et, en tous cas, pour garantir l'appui des côtés sur des parties capables de neutraliser la poussée de pressage, on emploie un pressoir latéral 22 inférieur structuré avec des supports à équerre. La dite pièce possède un mouvement vertical avec des guides cylindriques 23 et une commande pneumati que avec cylindre 24 à petite course, à commande verticale de la pièce 22, dans le but d'éviter l'interférence entre les équerres d'appui et le plan mobile 9 lorsque ce dernier se déplace verticalement.

7) Transporteur pour stations de pressage pour former des corps de meubles, selon les revendications précédentes, caractérisé par le fait que les commandes des cylindres sont prévues avec des pous soirs manuels et avec action contemporaine entre les cylindres 14 et 24.

0C58734

- 3 -

8) Transporteur pour stations de pressage pour former des corps
de meubles, selon les revendications précédentes, caractérisé par
le fait que, pour la motorisation des rouleaux de déchargement, un
motoréducteur 25 est employé qui est supporté par la bride 26 et
équipé avec courroies trapézoidales de connexion 27 transmettant
le mouvement aux rouleaux 15.

9) Transporteur pour stations de pressage pour former des corps
de meubles, selon les revendications précédentes, caractérisé par
le fait que, comme variante, un plan de pressage continue est pré
vu, avec insertion moyennant un ruban avec mouvement transversal et
un plan avec parties de compénetration à colonnes saillant du champ
d'opération par commande pneumatique.

10) Forme d'actuation avec enbasement 1, colonnes 2 dispositif de
soulèvement 3 du plan mobile, martinets cylindriques de guide 4 des
déplacements verticaux du plan mobile, partie frontale 5 du plan
mobile, poutre de support 6 du plan fixe, connexion avec charnières
de support 7, plan fixe 8 et plan mobile 9.

FIG. 1

FIG. 2

FIG. 3

FIG. 4

Office européen
des brevets

**RAPPORT DE RECHERCHE EUROPEENNE**

Numéro de la demande

EP 81 10 1279

| | **DOCUMENTS CONSIDERES COMME PERTINENTS** | | |
|---|---|---|---|
| Catégorie | Citation du document avec indication, en cas de besoin, des parties pertinentes | Revendica-tion concernée | |
| X | DE - A - 2 258 766 (BRACCI)  <br> * Revendications 1,2,7 * | 1-3, 6,7,9 | |
| | -- | | |
| | DE - B - 1 210 541 (SIEMPELKAMP)  <br> * Revendications 1,3,4 * | 1,4 | |
| | -- | | |
| | FR - A - 2 243 780 (KEURO)  <br> * Revendication 2 * | 2,4 | |
| | -- | | |
| | US - A - 1 871 077 (MOWAT)  <br> * Page 2, lignes 3-8 * | 4 | |
| | -- | | |
| A | DE - A - 2 818 298 (OCMAC) | | |
| A | DE - A - 2 545 444 (PRUST) | | |
| A | US - A - 3 709 762 (CHANDLER) | | |
| A | US - A - 3 302 942 (HOLLOMON) | | |
| A | FR - A - 862 583 (MULLER) | | |
| | ---- | | |

**CLASSEMENT DE LA DEMANDE (Int. Cl.)**

B 23 Q 7/00
B 27 M 3/18

**DOMAINES TECHNIQUES RECHERCHES (Int. Cl.)**

B 27 M
B 27 G
B 27 D
B 23 Q
B 25 B

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 03-11-1981 | DE GUSSEM |

OEB Form 1503.1 06.78